(19) Europäisches Patentamt
European Patent Office
Office européen des brevets

(11) **EP 4 029 373 A1**

(12) **EUROPEAN PATENT APPLICATION**
published in accordance with Art. 153(4) EPC

(43) Date of publication:
**20.07.2022 Bulletin 2022/29**

(21) Application number: **20863912.0**

(22) Date of filing: **11.09.2020**

(51) International Patent Classification (IPC):
*A01N 3/00* (2006.01)    *A01G 7/00* (2006.01)
*A01G 13/00* (2006.01)

(52) Cooperative Patent Classification (CPC):
**A01G 7/00; A01G 13/00; A01N 3/00**

(86) International application number:
**PCT/JP2020/034567**

(87) International publication number:
**WO 2021/049640 (18.03.2021 Gazette 2021/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.09.2019 JP 2019166686**

(71) Applicant: **Shikoku Research Institute Incorporated**
**Takamatsu-shi, Kagawa 761-0192 (JP)**

(72) Inventors:
• **ISHIDA Yutaka**
  **Takamatsu-shi Kagawa 761-0192 (JP)**
• **KAKIBUCHI Kazumasa**
  **Takamatsu-shi Kagawa 761-0192 (JP)**
• **HADA Ayako**
  **Takamatsu-shi Kagawa 761-0192 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54) **PLANT DISEASE CONTROL METHOD AND DISEASE CONTROL APPARATUS**

(57)    There are provided a plant disease control method and a plant disease control apparatus that can irradiate a plant under cultivation with an appropriate amount of near-infrared light to obtain an effect of controlling diseases while efficiently using light energy. The plant under cultivation is irradiated with the near-infrared light including a wavelength set within a wavelength range of 800 to 1000 nm so as to satisfy all following Equations 1 to 3 where X is an irradiance $(W/m^2)$ and Y is an irradiation time (second), so that the effect of controlling diseases can be obtained.

$$\text{Equation 1: } 644893X^{-1.873} \geq Y \geq 5901.9X^{-1.856}$$

$$\text{Equation 2: } X \geq 1$$

$$\text{Equation 3: } Y \geq 0.01$$

[FIG.1]

**Description**

[Technical Field]

The present invention relates a method and an apparatus for controlling diseases of a plant under cultivation.

[Background Art]

A method for irradiating a plant with light to control plant diseases has high safety and great demand in the market particularly for the plant served for food after harvesting owing to a non-use of pesticides.

Patent Document 1 (JP 6061124) discloses a method for continuously irradiating crops under cultivation with near-infrared light having a central wavelength of approximately 740 all day long to suppress the occurrence of powdery mildew.

In addition, Patent Document 2 (JP 5927015) discloses a method for controlling diseases of a plant cultivated in a nutrient solution, in which the plant is irradiated with light in the wavelength range of 400 to 750 nm for approximately 1 to 10 hours and is cultivated in a nutrient solution containing microorganisms having an effect of controlling plant diseases.

The technique disclosed in Patent Document 1 has superiority in that the occurrence of the powdery mildew can be suppressed by a simple method such as irradiating the plant under cultivation with the near-infrared light in the predetermined wavelength range. In addition, the near-infrared light has also superiority in that since the near-infrared light does not adversely affect a human body (particularly, eyes) unlike ultraviolet light and does not affect a day-length response of the plant, the near-infrared light does not change a growth state or a growth rate of the plant.

However, in the technique of Patent Document 1, since the plant has to be continuously irradiated with the near-infrared light all day long, a permanent irradiation device is required which can irradiate an entire plant cultivation area with the near-infrared light. Particularly, applying the technique to a relatively large plant such as a fruit tree cultivated in an open field requires a large irradiation device including many light sources of the near-infrared light, and a large cost is problematically required to install and maintain such a device.

In addition, in the technique disclosed in Patent Document 2, since the plant needs to be cultivated in the nutrient solution to which microorganisms are added in addition to irradiation with light, the technique problematically requires a large amount of cost to install and maintain the nutrient solution supply device and is not applicable to the cultivation in the open field.

[Citation List]

[Patent Literature]

Patent Document 1: Japanese Patent No. 6061124
Patent Document 2: Japanese Patent No. 5927015

[Summary of Invention]

[Problem to be Solved by Invention]

Therefore, an object of the invention is to provide a plant disease control method and a plant disease control apparatus that can obtain an effect of controlling the disease by clarifying the wavelength of the near-infrared light which exhibits the effect of controlling plant diseases and a relationship between an irradiance (irradiation light intensity) and an irradiation time, to facilitate proper management of the irradiance and the irradiation time of the near-infrared light irradiated to the plant under cultivation, and to properly manage the irradiance and the irradiation time even in a situation where it is generally difficult to manage the irradiance and the irradiation time, such as irradiating a relatively large plant cultivated in the open field with the near-infrared light using a small irradiation apparatus including a small number of light sources.

Another object is to provide a plant disease control method and a plant disease control apparatus that can prevent excessive irradiation and insufficient irradiation of the plant with the near-infrared light, and that can obtain the effect of controlling diseases at low cost (low electric power consumption) by efficiently using light energy.

[Solution to Problem]

The above problems are solved by the following means.

[1] A plant disease control method for irradiating a plant under cultivation with near-infrared light including a wavelength set within a wavelength range of 800 to 1000 nm so as to satisfy all following Equations 1 to 3 where X is an irradiance (W/m$^2$) and Y is an irradiation time (second).

$$\text{Equation 1: } 644893X^{-1.873} \geq Y \geq 5901.9X^{-1.856}$$

$$\text{Equation 2: } X \geq 1$$

$$\text{Equation 3: } Y \geq 0.01$$

[2] In the plant disease control method described in [1], wherein the irradiance is automatically adjusted in response to a fluctuation in the irradiation time of the near-infrared light.

[3] In the plant disease control method described in [1] and [2], wherein the plant disease control method is performed once every 1 to 14 days.

[4] In the plant disease control method described in [1], [2], or [3], wherein a disease of the plant is a disease caused by a fungus.

[5] In the plant disease control method described in [4], wherein the fungus is any one of an ascomycete, a basidiomycete, a mastigomycotina, an oomycete, and a deuteromycete.

[6] In the plant disease control method described in [1], [2], or [3], wherein a disease of the plant is any one of strawberry powdery mildew, tomato powdery mildew, tomato gray mold, tomato leaf mold, and cucumber downy mildew.

[7] A plant disease control apparatus comprising:

a light source configured to irradiate a plant under cultivation with near-infrared light including a wavelength set within a wavelength range of 800 to 1000 nm; and

adjustment means configured to adjust at least one of an irradiance and an irradiation time of the near-infrared light emitted from the light source so as to satisfy all following Equations 1 to 3 where X is the irradiance (W/m$^2$) and Y is the irradiation time (second).

$$\text{Equation 1: } 644893X^{-1.873} \geq Y \geq 5901.9X^{-1.856}$$

$$\text{Equation 2: } X \geq 1$$

$$\text{Equation 3: } Y \geq 0.01$$

[8] In the plant disease control apparatus described in [7], wherein the adjustment means is configured to adjust the irradiance through automatic control in response to a fluctuation in the irradiation time of the near-infrared light emitted from the light source.

[Advantageous Effects of Invention]

In the plant disease control method according to [1], since the method clarifies a range of the wavelength of the near-infrared light which exhibits an effect of controlling plant diseases and a relationship between the irradiance and the irradiation time of the near-infrared light represented by Equations 1 to 3, one or both of the irradiance and the irradiation time of the near-infrared light irradiated to the plant can be suitably adjusted. Therefore, even in a situation where it is generally difficult to manage the irradiance and the irradiation time such as irradiating a relatively large plant cultivated in an open field with the near-infrared light using a small irradiation device including a small number of light sources, an appropriate amount of irradiation can be performed without causing excessive irradiation or insufficient irradiation, thereby effectively controlling plant diseases.

In addition, in the plant disease control method according to [1], since the method clarifies a range of the wavelength of the near-infrared light which can obtain the effect of controlling plant diseases and the relationship between the irradiance and the irradiation time of the near-infrared light, excessive irradiation and insufficient irradiation of the plant with the near-infrared light can be prevented, and the effect of controlling diseases at low cost (lower electric power consumption) can be obtained by efficiently using light energy. In addition, excessive irradiation with the near-infrared light can be prevented, so that the lifespan of the light source can be extended.

Incidentally, the effect of controlling plant diseases obtained by implementing the invention according to [1] lasts for approximately 14 days in one implementation.

In addition, in the invention according to [1], the invention has clarified for the first time the range of the wavelength of the near-infrared light in which the effect of controlling plant diseases can be obtained and the relationship between the irradiance and the irradiation time of the near-infrared light represented by Equations 1 to 3, namely, suitable conditions of a disease control treatment, and details thereof will be described later.

In the invention, the near-infrared light irradiated to the plant may include the wavelength set within the wavelength range of 800 to 1000 nm, and may have one peak wavelength or two or more different peak wavelengths. In addition, the near-infrared light to be emitted has a central wavelength that desirably exists within the wavelength range of 800 to 1000 nm.

In the plant disease control method according to [2], since the irradiance is automatically adjusted in response to a fluctuation in the irradiation time of the near-infrared light, for example, even when a worker is unfamiliar with the irradiation work while performing near-infrared light irradiation work on the plant cultivated in a field or the like and cannot pay attention to the irradiation time, an appropriate amount of irradiation can be performed without causing excessive irradiation or insufficient irradiation, thereby effectively controlling plant diseases.

In the plant disease control method according to [3], since the plant disease control method is performed once every 1 to 14 days according to [1] or [2], as described above, the effect of controlling plant diseases can be maintained without interruption by the invention according to [1] or [2] which lasts for approximately 14 days in one implementation.

In the plant disease control method according to [4], it is possible to effectively control a disease caused by a fungus.

In the plant disease control method according to [5], it is possible to effectively prevent a disease caused by any one of an ascomycete, a basidiomycete, a mastigomycotina, an oomycete, and a deuteromycete.

In the plant disease control method according to [6], it is possible to effectively control strawberry powdery mildew, tomato powdery mildew, tomato gray mold, tomato leaf mold, and cucumber downy mildew.

In the plant disease control apparatus according to [7], since the range of the wavelength of the near-infrared light which exhibits the effect of controlling plant diseases and the relationship between the irradiance and the irradiation time of the near-infrared light represented by Equations 1 to 3 are clear, the plant diseases can be effectively controlled by appropriately adjusting one or both of the irradiance and the irradiation time of the near-infrared light irradiated to the plant.

In addition, according to the plant disease control apparatus, it is possible to prevent excessive irradiation to reduce the cost (low electric power consumption) and extend the lifespan of the light source by appropriately adjusting one or both of the irradiance and the irradiation time of the near-infrared light irradiated to the plant.

Since the plant disease control apparatus according to [8] can adjust the irradiance through automatic control in response to the fluctuation in the irradiation time of the near-infrared light emitted from the light source, for example, even when the worker is unfamiliar with the irradiation work while performing near-infrared light irradiation work on the plant cultivated in the field or the like and cannot pay attention to the irradiation time, the appropriate amount of irradiation can be performed without causing excessive irradiation or insufficient irradiation, thereby effectively controlling plant diseases.

[Brief Description of Drawings]

[Fig. 1] Fig. 1 is a graph showing the influence of the relationship between the irradiance and the irradiation time of near-infrared light on an effect of controlling tomato gray mold.
[Fig. 2] Fig. 2 is a graph showing the influence of the relationship between the irradiance and the irradiation time of near-infrared light on the effect of controlling strawberry powdery mildew.
[Fig. 3] Fig. 3 is a graph showing the influence of the relationship between the irradiance and the irradiation time of near-infrared light on the effect of controlling strawberry powdery mildew.
[Fig. 4] Fig. 4 is a graph showing the influence of the relationship between the irradiance and the irradiation time of near-infrared light on the effect of controlling tomato powdery mildew.

[Fig. 5] Fig. 5 is a graph showing the influence of the relationship between the irradiance and the irradiation time of near-infrared light on the effect of controlling tomato gray mold.

[Fig. 6] Fig. 6 is a graph showing the influence of the relationship between the irradiance and the irradiation time of near-infrared light on the effect of controlling tomato gray mold.

[Fig. 7] Fig. 7 is a graph showing the influence of the relationship between the irradiance and the irradiation time of near-infrared light on the effect of controlling tomato leaf mold.

[Fig. 8] Fig. 8 is a graph showing the influence of the relationship between the irradiance and the irradiation time of near-infrared light on the effect of controlling cucumber downy mildew.

[Fig. 9] Fig. 9 is a side view illustrating a plant disease control apparatus according to a first embodiment of the invention.

[Fig. 10] Fig. 10 is a descriptive view showing a usage state of the plant disease control apparatus according to the first embodiment of the invention.

[Fig. 11] Fig. 11 is a descriptive view showing a usage state of a plant disease control apparatus according to a second embodiment of the invention.

[Description of Embodiments]

Embodiments of a plant disease control method and a plant disease control apparatus of the invention will be described. Incidentally, the invention is not limited to the embodiments. In addition, in the invention, a numerical range represented using "to" means a range including numerical values written before and after "to" as a lower limit value and an upper limit value.

The plant disease control method and the plant disease control apparatus of the invention are completed in a way that the inventors clarify a wavelength of and a relationship between an irradiance and an irradiation time of near-infrared light which exhibits an effect of controlling plant diseases.

The present invention is applied to the plants including all plants cultivated by agricultural methods.

In addition, plant diseases in the invention are mainly caused by a fungus, and examples of such a pathogenic fungus include an ascomycete, a basidiomycete, a mastigomycotina, an oomycete, and a deuteromycete. The pathogenic fungus is, for example, a strawberry powdery mildew fungus (Sphaerotheca aphanis) and a tomato powdery mildew fungus (Oidium genus and Oidiopsis genus) that are the ascomycetes, a cucumber downy mildew fungus (Pseudoperonospora cubensis) that is the oomycete, or a tomato leaf mold fungus (Fulvia fulva) and a tomato gray mold fungus (Botrytis cinerea) that are the deuteromycetes. However, these are merely examples, and the invention is not limited thereto.

In the invention, the near-infrared light irradiated to the plant under cultivation includes the wavelength arbitrarily set within the wavelength range of 800 to 1000 nm, and may be a near-infrared light of a single wavelength such as laser, or may be a near-infrared light having a wavelength distribution such as a fluorescent lamp or an LED. In addition, although the near-infrared light may have one peak wavelength or two or more different peak wavelengths, the central wavelength of the near-infrared light to be emitted desirably exists within the wavelength range of 800 to 1000 nm. This is because the effect of controlling plant diseases may not be sufficiently exhibited in both the near-infrared light of the central wavelength of less than 800 nm and the near-infrared light of the central wavelength of exceeding 1000 nm.

For example, an irradiation instrument capable of emitting the near-infrared light may be used such as the light-emitting diode (LED), a fluorescent tube, a metal halide lamp, a sodium lamp, a halogen lamp, a xenon lamp, a neon tube, an inorganic electroluminescent element, an organic electroluminescent element, a chemiluminescent element, a laser, and the like. In addition, the near-infrared light may be light or sunlight emitted from a light source and transmitted through a spectral filter configured to transmit only a wavelength arbitrarily set within the wavelength range of 800 to 1000 nm.

[1. Plant Disease Control Method]

In the plant disease control method of the invention, the plant under cultivation needs to be irradiated with the near-infrared light including the wavelength set within the wavelength range of 800 to 1000 nm so as to satisfy all following Equations 1 to 3 where X is the irradiance (W/m$^2$) and Y is the irradiation time (second).

$$\text{Equation 1: } 644893X^{-1.873} \geq Y \geq 5901.9X^{-1.856}$$

$$\text{Equation 2: } X \geq 1$$

Equation 3: $Y \geq 0.01$

Equations 1 to 3 represent a relationship between the irradiance X and the irradiation time Y of the near-infrared light, which can exhibit the effect of controlling diseases on many types of plants, and the inventors of the invention have clarified for the first time the relationship based on results of many tests using many types of plants according to the invention.

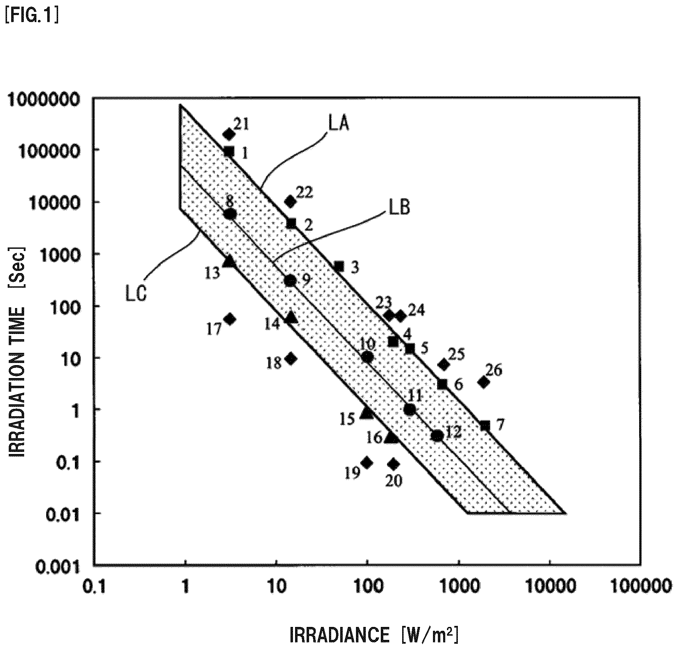

Equation 1 includes a regression equation "$Y = 644893X^{-1.873}$" represented by a regression line LA in a double logarithmic graph of Fig. 1. Here, if coordinates indicated by the irradiance X and the irradiation time Y exist above the regression line LA, the plant is subjected to excessive irradiation with the near-infrared light.

In the case of excessive irradiation with the near-infrared light, the irradiance or the irradiation time exceeds a required amount, and the sufficient effect of controlling diseases cannot be obtained. In addition, the electric power is wasted for requiring the generation of the near-infrared light of an amount exceeding the required amount, and the lifespan of the light source is undesirably shortened.

Equation 1 includes a regression equation "$Y = 5901.9X^{-1.856}$" represented by a regression line LC in the double logarithmic graph of Fig. 1. Here, if coordinates indicated by the irradiance X and the irradiation time Y exist below the regression line LC, the plant is subjected to insufficient irradiation with the near-infrared light. In the case of insufficient irradiation with the near-infrared light, the sufficient effect of controlling diseases cannot be obtained.

Incidentally, a regression line LB shown in Fig. 1 represents a regression equation "$Y = 41491X^{-1.848}$", and shows the relationship between the irradiance and the irradiation time, at which the effect of controlling plant diseases is the highest.

Further, when the irradiance is less than 1 W/m$^2$ in the irradiation of the plant with the near-infrared light, the sufficient effect of controlling diseases cannot be obtained unless the irradiation time is considerably lengthened. For this reason, it is not practical to perform the irradiation treatment with the irradiance set to less than 1 W/m$^2$ in the field or the like where the plant is cultivated.

In addition, when the irradiation time of the near-infrared light irradiated to the plant is less than 0.01 seconds, the sufficient effect of controlling diseases cannot be obtained unless the irradiance is considerably increased. For this reason, it is not practical to perform the irradiation treatment for the irradiation time of less than 0.01 seconds.

Then, if the plant is irradiated with the near-infrared light with the irradiance and the irradiation time set such that the coordinates exist within a range surrounded by four straight lines such as the regression line LA, the regression line LC, X = 1, and Y = 0.01 in Fig. 1, such effect of controlling diseases can be obtained.

When the irradiation conditions are expressed by the equation, the irradiation conditions satisfy all above Equations 1 to 3, and if the plant is irradiated with the near-infrared light in such a manner, the effect of controlling diseases can be obtained.

Favorable conditions of the disease control treatment, i.e., the wavelength range (800 to 1000 nm) of the near-infrared light where the effect of controlling plant diseases can be obtained and the relationship between the irradiance and the irradiation time represented by Equations 1 to 3, are common to many plants.

In order to obtain the effect of controlling plant diseases according to the invention, the plant needs to be irradiated with the near-infrared light such that the favorable conditions of the disease control treatment are satisfied at a portion where disease tends to occur on a surface of a plant body.

In the plant disease control method of the invention, irradiation with the near-infrared light may be continuous irradiation or intermittent irradiation. The continuous irradiation means that, for example, irradiation with near-infrared light is continuously performed for a predetermined time (for example, five minutes). The intermittent irradiation means that, for example, a set of irradiation for 10 seconds and non-irradiation for 10 seconds are repeated 30 times for the irradiation time of five minutes in total.

In addition, in the plant disease control method of the invention, when the near-infrared light irradiation treatment is performed on the plant, a surrounding light environment does not need to be dark, and the irradiation treatment may be performed, for example, under artificial lightings such as the fluorescent lamp or the LED, or under sunlight. However, it is not preferable that the irradiation treatment is performed under a light environment where the irradiance of light in other wavelength ranges is stronger than the irradiance of the near-infrared light in the wavelength range of 800 to 1000 nm.

The effect of controlling diseases that can be obtained by implementing the plant disease control method of the invention lasts for approximately 14 days in one implementation. Therefore, if the plant disease control method of the invention is repeatedly performed once every 1 to 14 days, the effect of controlling diseases can be maintained without interruption.

As the method for irradiating the plant with the near-infrared light in the invention, for example, if a plant cultivation location is inside of a building such as a greenhouse or a hydroponic room, the plant may be irradiated with the near-infrared light from an irradiation apparatus installed on a ceiling or a wall of the building. In addition, when the plant cultivation location is the open field, a mobile irradiation apparatus provided with the light source of the near-infrared light may be used. For example, it is possible to use a mobile irradiation apparatus in which a light source is provided on a bogie moving automatically or manually, an irradiation apparatus in which a light source is provided in a drone to irradiate the plant with the near-infrared light from above, and a small irradiation apparatus such as a flashlight in which the light source is held in a hand of a person to perform irradiation.

Since the plant disease control method of the invention clarifies the range of the wavelength of the near-infrared light which exhibits the effect of controlling plant diseases and the relationship between the irradiance and the irradiation time of the near-infrared light represented by Equations 1 to 3, the plant diseases can be effectively controlled by appropriately adjusting one or both of the irradiance and the irradiation time of the near-infrared light irradiated to the plant.

For example, even when the light source of the near-infrared light is far from the plant body to be irradiated and the irradiance is low on the surface of the plant body, the irradiation time can be adjusted to be lengthened to the extent that the effect of controlling diseases can be obtained even at the low irradiance.

In addition, in the case of irradiating the plant body with the near-infrared light while moving the light source, even when the irradiation time on the surface of the plant body is shortened by quickly passing the light source in the vicinity of the plant body to be irradiated, the irradiance can be adjusted to be increased to the extent that the effect of controlling diseases can be obtained even at the short irradiation time.

As described above, as an embodiment of the plant disease control method capable of appropriately adjusting the irradiance and the irradiation time, for example, the plant disease control method can be provided in which the plant under cultivation is irradiated with the near-infrared light including the wavelength set within the wavelength range of 800 to 1000 nm, while adjusting at least one of the irradiance and the irradiation time so as to satisfy all above Equations 1 to 3 where X is the irradiance ($W/m^2$) and Y is the irradiation time (second) and approximately based on a function expressed by "$Y = 41491X^{-1.848}$".

The equation "$Y = 41491X^{-1.848}$" is, as described above, the regression equation (function) representing the regression line LB shown in Fig. 1.

In addition, as another embodiment, the plant disease control method can be provided in which the plant under cultivation is irradiated with the near-infrared light including the wavelength set within the wavelength range of 800 to 1000 nm while adjusting at least one of the irradiance and the irradiation time so as to satisfy all above Equations 1 to 3 where X is the irradiance ($W/m^2$) and Y is the irradiation time (second) and approximately based on a function expressed by "$Y = 644893X^{-1.873}$".

The equation "$Y = 644893X^{-1.873}$" is, as described above, the regression equation (function) representing the regression line LA shown in Fig. 1.

Further, as another embodiment, the plant disease control method can be provided in which the plant under cultivation is irradiated with the near-infrared light including the wavelength set within the wavelength range of 800 to 1000 nm while adjusting at least one of the irradiance and the irradiation time so as to satisfy all above Equations 1 to 3 where X is the irradiance ($W/m^2$) and Y is the irradiation time (second) and approximately based on a function expressed by "$Y = 5901.9X^{-1.856}$".

The equation "$Y = 5901.9X^{-1.856}$" is, as described above, the regression equation (function) representing the regression line LC shown in Fig. 1.

As described above, when one or both of the irradiance and the irradiation time of the near-infrared light are adjusted based on the function representing the regression line LB, LA, or LC or other functions within the range where all above Equations 1 to 3 are satisfied, the adjustment can be automated by using general control means.

Particularly, when the irradiance is automatically adjusted in response to the fluctuation in the irradiation time of the near-infrared light, for example, even in a situation where the worker is unfamiliar with the irradiation treatment while performing the near-infrared light irradiation treatment on the plant cultivated in the field or the like and cannot pay attention to the irradiation time, an appropriate amount of irradiation can be performed without causing excessive irradiation or insufficient irradiation.

[2. Plant Disease Control Apparatus]

Next, the plant disease control apparatus of the invention will be described.

The plant disease control apparatus of the invention is characterized by including a light source configured to irradiate the plant under cultivation with the near-infrared light including the wavelength set within the wavelength range of 800 to 1000 nm, and adjustment means configured to adjust at least one of the irradiance and the irradiation time of the near-infrared light emitted from the light source so as to satisfy all following Equations 1 to 3 where X is the irradiance ($W/m^2$) and Y is the irradiation time (second).

$$\text{Equation 1: } 644893X^{-1.873} \geq Y \geq 5901.9X^{-1.856}$$

$$\text{Equation 2: } X \geq 1$$

$$\text{Equation 3: } Y \geq 0.01$$

In the invention, the light source may emit only the near-infrared light, or a light source that emits the near-infrared light together with visible light. The light source emitting the near-infrared light together with visible light may be, for example, a light source made by combining a white light-irradiating light source with a near-infrared light-irradiating light source, and a light source capable of emitting both white light and near-infrared light by a single light source. Specifically, an irradiation region of the near-infrared light can be visualized, for example, by using the light source formed of a combination of a white LED and a near-infrared LED.

According to the plant disease control apparatus, since the range of the wavelength of the near-infrared light which exhibits the effect of controlling plant diseases and the relationship between the irradiance and the irradiation time of the near-infrared light represented by Equations 1 to 3 are clear, the adjustment means can effectively control the plant diseases by appropriately adjusting one or both of the irradiance and the irradiation time of the near-infrared light irradiated to the plant.

As described above, as an embodiment of the plant disease control apparatus capable of appropriately adjusting one or both of the irradiance and the irradiation time, for example, a plant disease control apparatus can be provided with the light source configured to irradiate the plant under cultivation with the near-infrared light including the wavelength set within the wavelength range of 800 to 1000 nm, and adjustment means configured to adjust at least one of the irradiance and the irradiation time of the near-infrared light emitted from the light source so as to satisfy all above Equations 1 to 3 where X is the irradiance ($W/m^2$) and Y is the irradiation time (second) and approximately based on the function expressed by "$Y = 41491X^{-1.848}$".

The equation "$Y = 41491X^{-1.848}$" is, as described above, the regression equation (function) representing the regression line LB shown in Fig. 1.

In addition, as another embodiment, a plant disease control apparatus can be provided which includes a light source configured to irradiate the plant under cultivation with the near-infrared light including the wavelength set within the wavelength range of 800 to 1000 nm, and adjustment means configured to adjust at least one of the irradiance and the irradiation time of the near-infrared light emitted from the light source so as to satisfy all above Equations 1 to 3 where X is the irradiance ($W/m^2$) and Y is the irradiation time (second) and approximately based on the function expressed by "$Y = 644893X^{-1.873}$".

The equation "$Y = 644893X^{-1.873}$" is, as described above, the regression equation (function) representing the regression line LA shown in Fig. 1.

Further, as another embodiment, a plant disease control apparatus can be provided which includes a light source configured to irradiate the plant under cultivation with the near-infrared light including the wavelength set within the wavelength range of 800 to 1000 nm, and adjustment means configured to adjust at least one of the irradiance and the irradiation time of the near-infrared light emitted from the light source so as to satisfy all above Equations 1 to 3 where X is the irradiance ($W/m^2$) and Y is the irradiation time (second) and approximately based on the function expressed by "$Y = 5901.9X^{-1.856}$".

The equation "$Y = 5901.9X^{-1.856}$" is, as described above, the regression equation (function) representing the regression line LC shown in Fig. 1.

As described above, general control means is incorporated in the adjustment means configured to adjust one or both of the irradiance and the irradiation time of the near-infrared light within the range where all above Equations 1 to 3 are satisfied based on the function representing the regression line LB, LA, or LC or other functions, so that the adjustment means can adjust one or both of the irradiance and the irradiation time through automatic control.

Particularly, when the adjustment means is configured to adjust the irradiance through the automatic control in response to the fluctuation in the irradiation time of the near-infrared light, for example, even in a situation where the worker is unfamiliar with the irradiation treatment while performing the near-infrared light irradiation treatment on the plant cultivated in the field or the like and cannot pay attention to the irradiation time, the plant disease control apparatus can desirably perform an appropriate amount of irradiation without causing excessive irradiation or insufficient irradiation.

[2-1. First Embodiment of Plant Disease Control Apparatus]

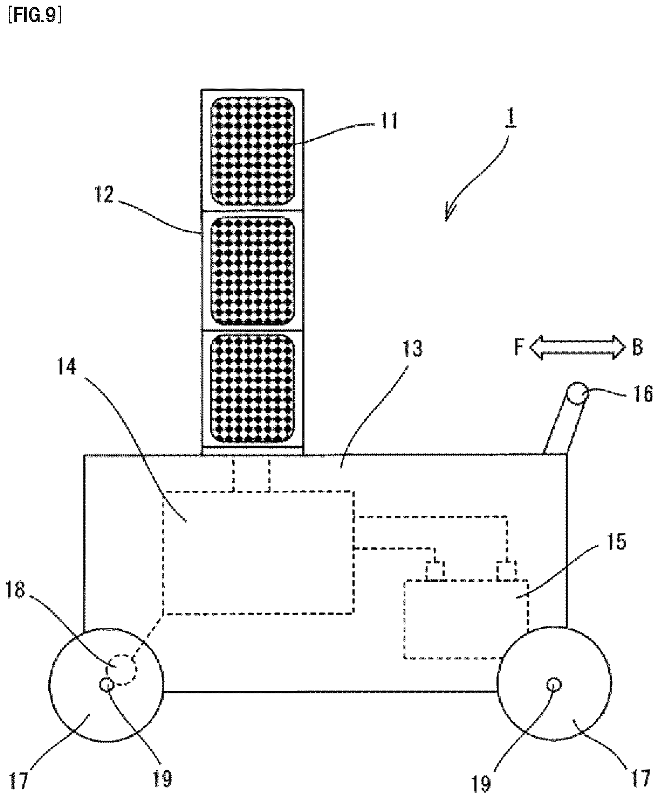

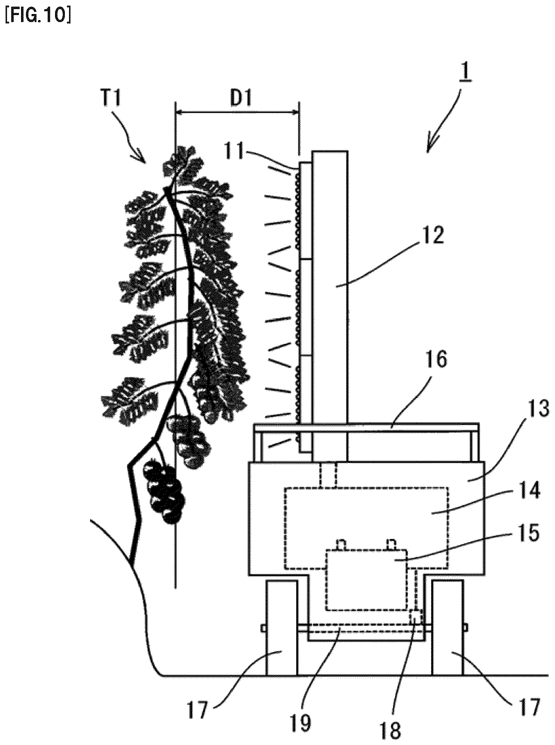

Figs. 9 and 10 show a handcart-type plant disease control apparatus 1 (hereinafter, referred to as a "handcart-type device"). Fig. 9 is a right side view of the handcart-type device 1, and Fig. 10 is a rear view.

The handcart-type device 1 is a handcart-type plant disease control apparatus that sequentially irradiates many plant bodies planted side by side in a row with the near-infrared light while a person pushes the device forward from a backside with the hands. The handcart-type device 1 has an external appearance including a base 13, a support board 12 that stands on an upper surface of the base 13 for supporting an irradiation portion 11 to be directed in a right direction, a handle 16 installed at a rear portion of the base 13, and four wheels 17 attached to four corners of a lower portion of the base 13 via axles 19.

The base 13 has an internal portion provided with a control unit 14 configured to perform automatic control of the irradiance of the near-infrared light emitted from the irradiation portion 11, a speed sensor 18 configured to measure a movement speed of the handcart-type device 1 based on a rotational speed of the axle 19, and a power supply unit 15 including a rechargeable lithium-ion battery configured to supply electric power to the irradiation portion 11, the control unit 14, and the speed sensor 18.

The irradiation portion 11 has a surface provided with many near-infrared LEDs configured to emit the near-infrared light of the central wavelength of 850 nm.

In addition, the irradiation portion 11 irradiates substantially the center position of the entirety of a plant body T1 with the near-infrared light of an intensity of which the irradiance ($W/m^2$) satisfies all following Equations 1 to 3 where X is the irradiance and Y is the irradiation time (second).

$$\text{Equation 1: } 644893X^{-1.873} \geq Y \geq 5901.9X^{-1.856}$$

$$\text{Equation 2: } X \geq 1$$

$$\text{Equation 3: } Y \geq 0.01$$

In order to cause the irradiation portion 11 to emit the near-infrared light of the above intensity, the control unit 14 performs control to automatically adjust the irradiance of the near-infrared light emitted from the irradiation portion 11 in response to the fluctuation in the movement speed of the handcart-type device 1 measured by the speed sensor 18, based on the function "$Y = 41491X^{-1.848}$".

A method for irradiating many plant bodies T1 planted side by side in the row with the near-infrared light by the handcart-type device 1 will be as follows.

First, one plant body T1 closest to the handcart-type device 1 placed at a location where irradiation work is started is selected from the many plant bodies T1 planted side by side in the row, and a distance D1 is measured between substantially the center position of the entirety of the one plant body T1 and substantially the center position of the irradiation portion 11 of the handcart-type device 1.

Next, a value of the measured distance D1 is input to the control unit 14. Then, the control unit 14 calculates and sets the intensity of the near-infrared light emitted from the irradiation portion 11 such that the intensity of the irradiance ($W/m^2$) at substantially the center position of the entire the plant body T1 satisfies all above Equations 1 to 3 where X is the irradiance and Y is the irradiation time (second).

Thereafter, irradiation with the near-infrared light is started by turning on a switch that puts the irradiation portion 11 on and off, and the handcart-type device 1 is moved by holding the handle 16 from the back side and pushing or pulling the handcart-type device 1 in a front direction F or in a back direction B while keeping the distance D1 as much as possible, so that the irradiation work is continuously performed on a plurality of the plant bodies T1 in sequence.

Then, the speed sensor 18 measures the movement speed of the handcart-type device 1, and the control unit 14 automatically determines the intensity of the near-infrared light emitted from the irradiation portion 11, according to the function "$Y = 41491X^{-1.848}$" based on the measured value. When the movement speed of the handcart-type device 1 fluctuates, the intensity of the near-infrared light to be emitted is also changed immediately. Generally, when the movement speed of the handcart-type device 1 is decreased, near-infrared light to be emitted is strengthened, and when the movement speed is increased, the near-infrared light to be emitted is weakened.

Finally, when the irradiation work for the plurality of plant bodies T1 arranged in the row by the near-infrared light is completed, the irradiation portion 11 is turned off.

According to the handcart-type device 1, since the irradiance can be adjusted by the automatic control in response to the fluctuation in the movement speed of the handcart-type device 1, i.e., the fluctuation in the irradiation time of the near-infrared light emitted from the irradiation portion 11, for example, even in a situation where the worker is unfamiliar with the irradiation work while performing the near-infrared light irradiation treatment on the plant bodies T1 and cannot pay attention to the irradiation time, an appropriate amount of irradiation can be performed without causing excessive irradiation or insufficient irradiation, thereby effectively controlling plant diseases.

[2-2. Second Embodiment of Plant Disease Control Apparatus]

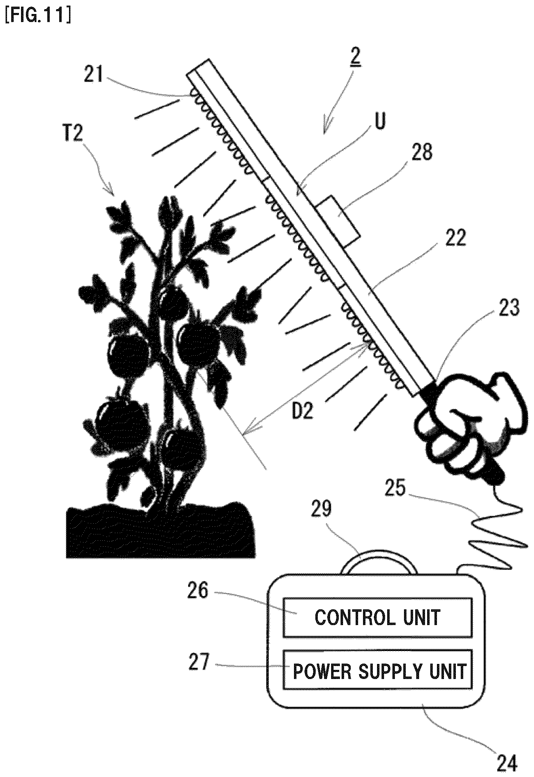

Fig. 11 shows a hand-held plant disease control apparatus 2 (hereinafter, referred to as a "hand-held device").

The hand-held device 2 is a small plant disease control apparatus that allows the light source to be held in the hand of the person and to irradiate the plant body with the near-infrared light. The hand-held device 2 has an external appearance including an irradiation unit U including an irradiation portion 21 arranged with many near-infrared LEDs, a support bar 22 for supporting the irradiation portion 21 to be directed in a front direction, a grip portion 23 extending downward from the support bar 22, and an acceleration sensor 28 attached to the support bar 22 to measure a speed at which the support bar moves in a right-left direction; and a housing 24 connected to the irradiation unit U via a cord 25 and having a handgrip 29.

The housing 24 has an internal portion provided with a control unit 26 configured to perform automatic control of the irradiance of the near-infrared light emitted from the irradiation portion 21, and a power supply unit 27 including a rechargeable lithium-ion battery configured to supply electric power to the irradiation portion 21, the acceleration sensor 28, and the control unit 26.

The irradiation portion 21 has a surface provided with the many near-infrared LEDs configured to emit the near-infrared light of the central wavelength of 850 nm toward the front direction of the irradiation unit U.

In addition, the irradiation portion 21 irradiates substantially the center position of an entire plant body T2 with the near-infrared light of the intensity of which the irradiance (W/m$^2$) satisfies all following Equations 1 to 3 where X is the irradiance and Y is the irradiation time (second).

$$\text{Equation 1: } 644893X^{-1.873} \geq Y \geq 5901.9X^{-1.856}$$

$$\text{Equation 2: } X \geq 1$$

$$\text{Equation 3: } Y \geq 0.01$$

In order to cause the irradiation portion 21 to emit the near-infrared light of the above intensity, the control unit 26 performs the automatic control to adjust the irradiance of the near-infrared light emitted from the irradiation portion 21 in response to the fluctuation in the movement speed of the support bar 22 measured by the acceleration sensor 28, based on the function "$Y = 41491X^{-1.848}$".

A method for irradiating a plurality of the plant bodies T2 with the near-infrared light by the hand-held device 2 will be as follows.

First, with the grip portion 23 held in the hand, the irradiation unit U is held over one plant body T2 subjected to the initial irradiation work, and a distance D2 is measured between substantially the center position of the entire plant body T2 and substantially the center position of the irradiation portion 21 of the irradiation unit U located at a position where the irradiation work is easily performed.

Next, a value of the measured distance D2 is input to the control unit 26. Then, the control unit 26 calculates and sets the intensity of the near-infrared light emitted from the irradiation portion 21, such that the intensity of the irradiance (W/m$^2$) at substantially the center position of the entire plant body T2 satisfies all above Equations 1 to 3 where X is the irradiance and Y is the irradiation time (second).

Thereafter, irradiation with the near-infrared light is started by turning on a switch that puts the irradiation portion 21 on and off, and the support bar 22 of the irradiation unit U is moved in the right or left direction while the distance D2 is kept as much as possible, so that the irradiation work is continuously performed on the plurality of the plant bodies T2 in sequence.

Then, the acceleration sensor 28 measures the movement speed of the support bar 22, and the control unit 26 automatically determines the intensity of the near-infrared light emitted from the irradiation portion 21, according to the function "$Y = 41491X^{-1.848}$" based on the measured value. When the movement speed of the support bar 22 fluctuates, the intensity of the near-infrared light to be emitted is also changed immediately. Generally, when the movement speed of the support bar 22 is decreased, the near-infrared light to be emitted is strengthened, and conversely, when the movement speed is increased, the near-infrared light to be emitted is weakened.

Finally, when the irradiation work for the plurality of plant bodies T2 with the near-infrared light is completed, the irradiation portion 21 is turned off.

According to the hand-held device 2, since the irradiance can be adjusted by automatic control in response to the fluctuation in the movement speed of the support bar 22 of the irradiation unit U, i.e., the fluctuation in the irradiation time of the near-infrared light emitted from the irradiation portion 21, for example, even in a situation where the worker is unfamiliar with the irradiation work while performing the near-infrared light irradiation treatment on the plant bodies T2 and cannot pay attention to the irradiation time, an appropriate amount of irradiation can be performed without causing excessive irradiation or insufficient irradiation, thereby effectively controlling plant diseases.

[Test Examples]

[Test Example 1: Effect of Controlling Tomato Gray Mold by Irradiating Tomato Leaf with Near-infrared Light (1)]

A plurality of healthy tomato (variety: House Momotaro) seedlings that were grown in the small pots each having a height of 8 cm and were pinched at the fourth leaf were cut at petioles to collect a total of 243 leaves. The 243 leaves were respectively placed on absorbed cotton wool in Petri dishes and were divided into 26 test plots including "test plot 1" to "test plot 26", and "comparison plot" each including nine leaves.

Next, as for the nine cut leaves in each test plot, surfaces of leaf blades on the cut leaves were irradiated with the near-infrared light of the central wavelength of 850 nm emitted from the light source (LED) under the irradiation condition (irradiance and irradiation time) of each test plot shown in Table 1. Then, the irradiance was measured by an irradiance meter (manufactured by Delta OHM Corporation and DO9721). In addition, the nine cut leaves in the comparison plot were not irradiated with the near-infrared light. Thereafter, the surfaces of the leaf blades of all the cut leaves in the test plots 1 to 26 and the comparison plot were inoculated with a brush by applying spores of gray mold fungi (Botrytis cinerea NBRC9397) proliferated in a potato dextrose agar medium. After inoculation, the Petri dishes of all the cut leaves were covered with lids to prepare nine samples of each of the test plots 1 to 26 and nine samples of the comparison plot.

After all the prepared samples were stored in a dark place at 25°C for three days, a disease incidence state of tomato gray mold was visually confirmed at the leaf blade on the cut leaf of each sample and classified into any one of the following "disease incidence levels" a to e. A "disease severity" of each test plot was calculated by the following "disease severity calculation equation". Then, a "control value" of each test plot was also calculated by the following "control value calculation equation". Control value calculation results are shown in Table 1.

Incidentally, the control value is an index indicating a control effect of a control material such as a pesticide. Generally, when the value is 10 or more, it is said that there is a control effect, and when the value is 50 or more, it is said that there is a strong control effect equivalent to that of the chemical pesticide.

[Disease Incidence Level]

a. No lesion is identified on the surface of the leaf blade .. disease incidence index 0
b. A lesion area ratio on the entire surface of the leaf blade is less than 5% .. disease incidence index 1
c. The lesion area ratio on the entire surface of the leaf blade is 5% or more and less than 25% .. disease incidence index 2
d. The lesion area ratio on the entire surface of the leaf blade is 25% or more and less than 50% .. disease incidence index 3
e. The lesion area ratio on the entire surface of the leaf blade is 50% or more .. disease incidence index 4

[Disease Severity Calculation Equation]

$$\text{Disease severity} = [\Sigma(\text{number of samples by disease incidence level} \times \text{disease incidence index}) \div (\text{number of samples} \times 4)] \times 100$$

[Control Value Calculation Equation]

$$\text{Control value} = 100 - (\text{disease severity in test plot/disease severity in comparison plot}) \times 100$$

[Table 1]

| Test Plot Number | Irradiance [W/m²] | Irradiation Time [Sec] | Control Value | Regression Equation |
|---|---|---|---|---|
| 1 | 3 | 86,400 | 24 | A |
| 2 | 15 | 3,600 | 30 | A |
| 3 | 50 | 600 | 18 | A |
| 4 | 200 | 20 | 36 | A |
| 5 | 300 | 15 | 12 | A |
| 6 | 700 | 5 | 38 | A |
| 7 | 2,000 | 0.5 | 39 | A |
| 8 | 3 | 5,400 | 64 | B |
| 9 | 14 | 300 | 64 | B |
| 10 | 100 | 10 | 67 | B |
| 11 | 300 | 1 | 62 | B |
| 12 | 600 | 0.3 | 72 | B |
| 13 | 3 | 600 | 36 | C |
| 14 | 15 | 60 | 42 | C |
| 15 | 100 | 1 | 22 | C |
| 16 | 200 | 0.5 | 16 | C |
| 17 | 3 | 60 | 0 | - |
| 18 | 15 | 10 | 1 | - |
| 19 | 100 | 0.1 | 0 | - |
| 20 | 200 | 0.1 | 2 | - |
| 21 | 3 | 172,800 | 2 | - |
| 22 | 15 | 10,800 | 0 | - |
| 23 | 200 | 60 | 5 | - |
| 24 | 300 | 60 | 2 | - |
| 25 | 700 | 10 | 1 | - |
| 26 | 2,000 | 10 | 0 | - |

Fig. 1 shows the disposition of the irradiation conditions of test plots 1 to 26 in Table 1 in the double logarithmic graph where the horizontal axis (X axis) is the irradiance (W/m²) and the vertical axis (Y axis) is the irradiation time (second). Incidentally, a number added to the coordinate position of the irradiation conditions of each test plot in Fig. 1 represents the test plot number written in Table 1.

The coordinate positions of the irradiation conditions of test plots 8 to 12 each of which the control value was a very high value of 50 or more were arranged along a substantially straight line descending to the right in Fig. 1, and the regression equation of the coordinate positions was calculated by the least squares method, thereby obtaining Regression Equation B. The regression line LB is a representation of Regression Equation B in the double logarithmic graph of Fig. 1.

Regression Equation B: $Y = 41491X^{-1.848}$ (determination coefficient $R^2 = 0.9993$).

In Fig. 1, among the irradiation conditions of the test plots whose coordinate positions are located above the regression line LB, the irradiation conditions under which the control values are 10 or more and less than 50 are the irradiation conditions of the test plots 1 to 7. The regression equation of the coordinate positions was calculated by the least squares method, and Regression Equation A was obtained. The regression line LA is a representation of Regression Equation A in the double logarithmic graph of Fig. 1.

$$\text{Regression Equation A: } Y = 644893X^{-1.873} \text{ (determination coefficient } R^2 = 0.9966).$$

In addition, in Fig. 1, among the irradiation conditions of the test plots whose coordinate positions are located below the regression line LB, the irradiation conditions under which the control values are 10 or more and less than 50 are the irradiation conditions of the test plots 13 to 16. The regression equation of the coordinate positions was calculated by the least squares method, and Regression Equation C was obtained. The regression line LC is a representation of Regression Equation C in the double logarithmic graph of Fig. 1.

$$\text{Regression Equation C: } Y = 5901.9X^{-1.856} \text{ (determination coefficient } R^2 = 0.9927).$$

As described above, in Fig. 1, all the irradiation conditions of the test plots whose coordinate positions are located between the regression line LA and the regression line LC show control values of 10 or more, it can be said that the effect of controlling the tomato gray mold is identified.

On the other hand, in Fig. 1, both of the test plots 21 to 26 whose coordinate positions are located above the regression line LA and the test plots 17 to 20 whose coordinate positions are located below the regression line LC have control values less than 10, and the effect of controlling the tomato gray mold is not identified.

Further, generally, when the irradiance is less than 1 W/m$^2$ in the irradiation of plants such as tomatoes with the near-infrared light, the sufficient effect of controlling the disease such as the tomato gray mold cannot be obtained unless the irradiation time is not considerably lengthened. For this reason, it is not practical to perform the irradiation treatment with the irradiance set to less than 1 W/m$^2$ in the field or the like where the plants such as tomatoes are cultivated.

In addition, when the irradiation time of the near-infrared light irradiated to the plants such as tomatoes is less than 0.01 seconds, the sufficient effect of controlling the disease such as the tomato gray mold cannot be obtained unless the irradiance is considerably increased. For this reason, it is not practical to perform the irradiation treatment for the irradiation time of less than 0.01 seconds.

Then, if tomatoes are irradiated with the near-infrared light with the irradiance and the irradiation time set such that the coordinates exist on each side of or inside a "substantially trapezoidal shape" surrounded by four straight lines such as the regression line LA, the regression line LC, X = 1, and Y = 0.01 in Fig. 1, it can be said that the effect of controlling the tomato gray mold can be reliably obtained.

When the conditions are expressed by an equation, the conditions satisfy all following Equations 1 to 3. If tomatoes are irradiated with the near-infrared light in such a manner, it can be said that the effect of controlling the tomato gray mold can be reliably obtained.

$$\text{Equation 1: } 644893X^{-1.873} \geq Y \geq 5901.9X^{-1.856}$$

$$\text{Equation 2: } X \geq 1$$

$$\text{Equation 3: } Y \geq 0.01$$

[Test Example 2: Effect of Controlling Strawberry Powdery Mildew by Irradiating Strawberry Leaf with Near-infrared Light]

Strawberries (variety: Sachinoka) were cut at petioles to collect 10 healthy new leaves, and the 10 new leaves were respectively placed on the absorbed cotton wool in the Petri dishes and were classified into the "test plot" and the "comparison plot" each including five leaves. As for the five cut leaves in the test plot, the surfaces of the leaf blades on the cut leaves were irradiated with the near-infrared light of the central wavelength of 850 nm emitted from the light source (LED) with the irradiance of 14 W/m$^2$ for 300 seconds. Then, the irradiance was measured by the irradiance meter (manufactured by Delta OHM Corporation and DO9721). In addition, the five cut leaves in the comparison plot were not irradiated with the near-infrared light.

Thereafter, the surfaces of the leaf blades of all the cut leaves in the test plot and the comparison plot were inoculated with the brush by applying strawberry powdery mildew fungi (Sphaerotheca aphanis) collected from strawberry leaves infected with strawberry powdery mildew. After inoculation, the Petri dishes of all the cut leaves were covered with the lids to prepare five samples of the test plot and five samples of the comparison plot.

After all the prepared samples were stored in the dark place at 23°C for nine days, the disease incidence state of the strawberry powdery mildew was visually confirmed at the leaf blade on the cut leaf of each sample and classified into any one of the following "disease incidence levels" a to e. The "disease severity" was calculated by the following "disease severity calculation equation" for each sample of the test plot and each sample of the comparison plot. Then, the "control value" of each test plot was also calculated by the following "control value calculation equation".

[Disease Incidence Level]

a. No lesion is identified on the surface of the leaf blade .. disease incidence index 0
b. The lesion is identified in an area portion that is less than 1/3 of the entire surface of the leaf blade .. disease incidence index 1
c. The lesion is identified in the area portion that is 1/3 or more and less than 2/3 of the entire surface of the leaf blade .. disease incidence index 2
d. The lesion is identified in the area portion that is 2/3 or more of the entire surface of the leaf blade .. disease incidence index 3
e. The lesion is identified on the entire surface of the leaf blade .. disease incidence index 4

[Disease Severity Calculation Equation]

$$\text{Disease severity} = [\Sigma(\text{number of samples by disease incidence level} \times \text{disease incidence index}) \div (\text{number of samples} \times 4)] \times 100$$

[Control Value Calculation Equation]

$$\text{Control value} = 100 - (\text{disease severity in test plot}/\text{disease severity in comparison plot}) \times 100$$

As a result of the calculation, the disease severity was 15 in the samples of the test plot that were irradiated with the near-infrared light, whereas the disease severity was 40 in the samples of the comparison plot that were not irradiated with the near-infrared light. Therefore, the control value was 62.5 in the test plot, and it was found that the strawberry powdery mildew could be effectively controlled by the irradiation treatment with the near-infrared light based on the invention.

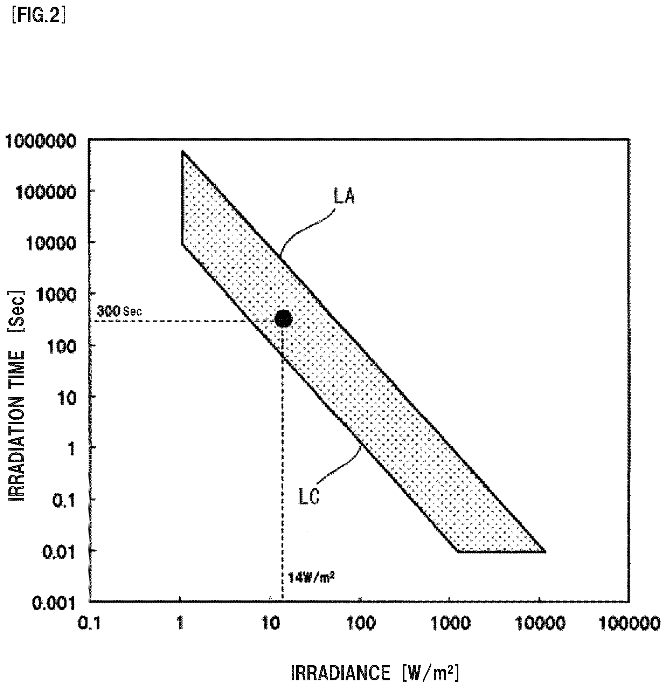

Fig. 2 is the double logarithmic graph where the horizontal axis (X axis) is the irradiance ($W/m^2$) and the vertical axis (Y axis) is the irradiation time (second) and shows the disposition of the coordinate "●" representing the irradiance (14 $W/m^2$) and the irradiation time (300 seconds) that are the irradiation condition of the near-infrared light of the central wavelength of 850 nm irradiated to the cut leaves in the test plot.

Incidentally, the range of the "substantially trapezoidal shape" shown at the substantially central portion of the graph in Fig. 2 is surrounded by four straight lines such as the regression line LA, the regression line LC, X = 1, and Y = 0.01, and when the range is expressed by the equation, the range satisfies all following Equations 1 to 3.

$$\text{Equation 1: } 644893X^{-1.873} \geq Y \geq 5901.9X^{-1.856}$$

$$\text{Equation 2: } X \geq 1$$

$$\text{Equation 3: } Y \geq 0.01$$

As shown in Fig. 2, the coordinate "●" indicates the irradiation condition under which the strawberry powdery mildew can be effectively controlled and is disposed inside the "substantially trapezoidal shape". Namely, if strawberries are irradiated with the near-infrared light with the irradiance and the irradiation time set such that the coordinates exist inside the "substantially trapezoidal shape", the effect of controlling the strawberry powdery mildew can be obtained. Thus, it can be said that the control effect can be obtained by emitting the near-infrared light so as to satisfy all above Equations 1 to 3.

[Test Example 3: Effect of Controlling Strawberry Powdery Mildew by Irradiating Strawberry Seedling with Near-infrared Light]

20 healthy strawberry (variety: Sachinoka) seedlings grown in the small pots each having a height of 8 cm were divided into "test plot 1", "test plot 2", "test plot 3", and "comparison plot" each including five seedlings.

Next, as for the five seedlings of the test plot 1, substantially a center position of an entire above-ground portion of each seedling was irradiated with the near-infrared light of the central wavelength of 850 nm emitted from the light source (LED) with the irradiance of 7 W/m$^2$ for 600 seconds to prepare samples of the test plot 1. Then, the irradiance was measured by the irradiance meter (manufactured by Delta OHM Corporation and DO9721). As for the five seedlings of the test plot 2, substantially the center position of each entire seedling was irradiated with the near-infrared light of the central wavelength of 850 nm with the irradiance of 14 W/m$^2$ for 300 seconds to prepare samples of the test plot 2.

As for the five seedlings of the test plot 3, substantially the center position of each entire seedling was irradiated with the near-infrared light of the central wavelength of 850 nm with the irradiance of 28 W/m$^2$ for 150 seconds to prepare samples of the test plot 3.

In addition, the five seedlings of the comparison plot were not irradiated with the near-infrared light and were prepared as samples of the comparison plot as they were.

Thereafter, all the samples of the test plots 1 to 3 and the comparison plot were carried into the greenhouse at 20°C, disposed around seedlings infected with the strawberry powdery mildew, and stored for 14 days.

Next, the disease incidence state of the strawberry powdery mildew was visually confirmed for all the samples after storage, and the infection rate was calculated for each of the test plots 1 to 3 and the comparison plot. Results are as follows.

[Infection Rate]

Test plot 1 (7 W/m$^2$ and 600 seconds) .. infection rate 25%
Test plot 2 (14 W/m$^2$ and 300 seconds) .. infection rate 12.5%
Test plot 3 (28 W/m$^2$ and 150 seconds) .. infection rate 0%
Comparison plot (not irradiated) .. infection rate 50%

From the infection rate results, it was found that the strawberry powdery mildew could be effectively controlled over 14 days by the irradiation treatment with the near-infrared light based on the invention.

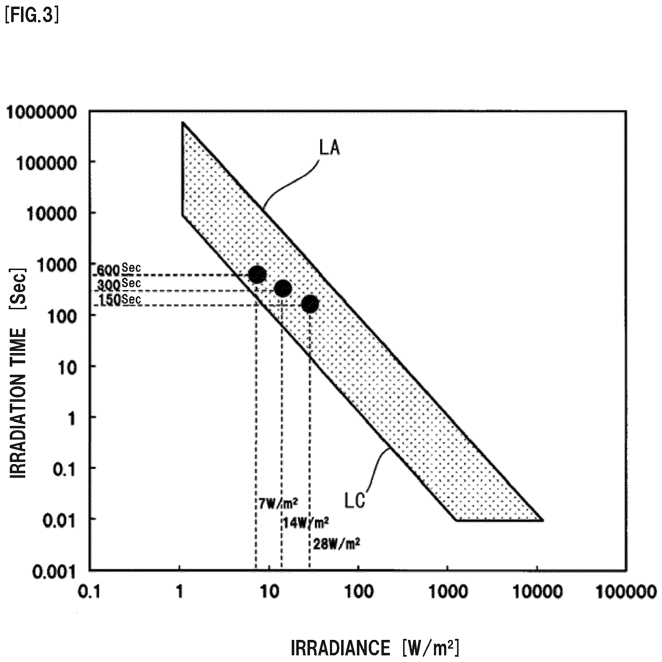

Fig. 3 is the double logarithmic graph where the horizontal axis (X axis) is the irradiance (W/m$^2$) and the vertical axis (Y axis) is the irradiation time (second) and shows the disposition of coordinates "●" representing each irradiation condition (irradiance and irradiation time) of the near-infrared light of the central wavelength of 850 nm irradiated to the seedlings of the test plots 1 to 3.

Incidentally, similarly to Fig. 1, the range of the "substantially trapezoidal shape" shown at the substantially central portion of the graph in Fig. 3 is surrounded by four straight lines such as the regression line LA, the regression line LC, X = 1, and Y = 0.01, and when the range is expressed by the equation, the range satisfies all following Equations 1 to 3.

$$\text{Equation 1: } 644893X^{-1.873} \geq Y \geq 5901.9X^{-1.856}$$

$$\text{Equation 2: } X \geq 1$$

Equation 3: $Y \geq 0.01$

As shown in Fig. 3, three coordinates "●" indicate the irradiation conditions under which the strawberry powdery mildew can be effectively controlled and are disposed inside the "substantially trapezoidal shape". Namely, if strawberries are irradiated with the near-infrared light with the irradiance and the irradiation time set such that the coordinates exist inside the "substantially trapezoidal shape", the effect of controlling the strawberry powdery mildew can be obtained. Thus, it can be said that the control effect can be obtained by emitting the near-infrared light so as to satisfy all above Equations 1 to 3.

[Test Example 4: Effect of Controlling Tomato Powdery Mildew by Irradiating Tomato Seedling with Near-infrared Light]

15 healthy tomato (variety: Momotaro 8) seedlings that were grown in the small pots each having a height of 8 cm and were pinched at the fourth leaf were divided into "test plot 1", "test plot 2", and "comparison plot" each including five seedlings.

Next, as for the total of 10 seedlings of the test plots 1 and 2, substantially the center position of the entire above-ground portion of each seedling was irradiated with the near-infrared light of the central wavelength of 850 nm emitted from the light source (LED) with the irradiance of 14 W/m$^2$ for 300 seconds. Then, the irradiance was measured by the irradiance meter (manufactured by Delta OHM Corporation and DO9721). In addition, the five seedlings of the comparison plot were not irradiated with the near-infrared light.

Then, the surfaces of the leaf blades of the leaves of the five seedlings in the comparison plot were inoculated with the brush by applying tomato powdery mildew fungi (Oidium genus) collected from tomato leaves infected with the tomato powdery mildew. In addition, the seedings of the test plots 1 and 2 were not inoculated with tomato powdery mildew fungi. Thereafter, all the 15 seedlings of the test plots 1 and 2 and the comparison plot were carried into and stored in the greenhouse at 20°C.

On a third day after the start of storage, the surfaces of the leaf blades on the leaves of the five seedlings in the test plot 1 were inoculated with the brush by applying tomato powdery mildew fungi collected from tomato leaves infected with the tomato powdery mildew, and the five seedlings were stored in the greenhouse at 20°C for 15 days.

In addition, on a seventh day after the start of storage, the surfaces of the leaf blades on the leaves of the five seedlings in the test plot 2 were inoculated with the brush by applying tomato powdery mildew fungi collected from tomato leaves infected with the tomato powdery mildew, and the five seedlings were stored in the greenhouse at 20°C for 15 days. The five seedlings of the comparison plot were stored in the greenhouse at 20°C for 15 days as they were from the start of storage.

Next, one leaf was arbitrarily selected from each of the total 15 seedings of the test plots 1 and 2 and the comparison plot, and the leaves were cut at petioles to obtain five samples of cut leaves for each of the test plots 1 and 2 and the comparison plot.

Then, the disease incidence state of the tomato powdery mildew was visually confirmed at the leaf blade of each sample and classified into any one of the following "disease incidence levels" a to e. The "disease severity" was calculated by the following "disease severity calculation equation" for each sample of the test plot 1, each sample of the test plot 2, and each sample of the comparison plot. Then, the "control value" of each test plot was also calculated by the following "control value calculation equation".

[Disease Incidence Level]

a. No lesion is identified on the surface of the leaf blade .. disease incidence index 0
b. The lesion is identified in the area portion that is less than 1/3 of the entire surface of the leaf blade .. disease incidence index 1
c. The lesion is identified in the area portion that is 1/3 or more and less than 2/3 of the entire surface of the leaf blade .. disease incidence index 2
d. The lesion is identified in the area portion that is 2/3 or more of the entire surface of the leaf blade .. disease incidence index 3
e. The lesion is identified on the entire surface of the leaf blade .. disease incidence index 4

[Disease Severity Calculation Equation]

Disease severity = [∑(number of samples by disease incidence level × disease incidence index) ÷ (number of samples × 4)] × 100

[Control Value Calculation Equation]

Control value = 100 - (disease severity in test plot/disease severity in comparison plot) × 100

As a result of the calculation, the disease severity was 25 in the samples of test plot 1 that were inoculated with tomato powdery mildew fungi on the third day after irradiation with the near-infrared light. In addition, the disease severity was 40 in the samples of test plot 2 that were inoculated with tomato powdery mildew fungi on the seventh day after irradiation with the near-infrared light. On the other hand, the disease severity was 55 in the samples of the comparison plot that were inoculated with tomato powdery mildew fungi without being irradiated with the near-infrared light.

Therefore, the control values were 54.5 and 27.3 in test plots 1 and 2 respectively, and it was found that the tomato powdery mildew could be effectively controlled for at least seven days after the irradiation treatment by the irradiation treatment with the near-infrared light based on the invention.

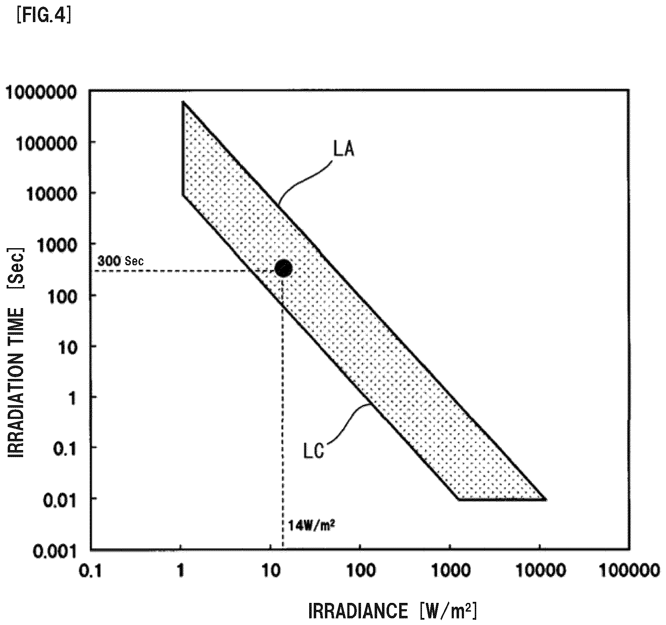

Fig. 4 is the double logarithmic graph where the horizontal axis (X axis) is the irradiance ($W/m^2$) and the vertical axis (Y axis) is the irradiation time (second) and shows the disposition of the coordinate "●" representing the irradiance (14 $W/m^2$) and the irradiation time (300 seconds) that are the irradiation condition of the near-infrared light of the central wavelength of 850 nm irradiated to the cut leaves in the test plots 1 and 2.

Incidentally, similarly to Fig. 1, the range of the "substantially trapezoidal shape" shown at the substantially central portion of the graph in Fig. 4 is surrounded by four straight lines such as the regression line LA, the regression line LC, X = 1, and Y = 0.01, and when the range is expressed by the equation, the range satisfies all following Equations 1 to 3.

$$\text{Equation 1: } 644893X^{-1.873} \geq Y \geq 5901.9X^{-1.856}$$

$$\text{Equation 2: } X \geq 1$$

$$\text{Equation 3: } Y \geq 0.01$$

As shown in Fig. 4, the coordinate "●" indicates the irradiation condition under which the tomato powdery mildew can be effectively controlled and is disposed inside the "substantially trapezoidal shape". Namely, if tomatoes are irradiated with the near-infrared light with the irradiance and the irradiation time set such that the coordinates exist inside the "substantially trapezoidal shape", the effect of controlling the tomato powdery mildew can be obtained. Thus, it can be said that the control effect can be obtained by emitting the near-infrared light so as to satisfy all above Equations 1 to 3.

[Test Example 5: Effect of Controlling Tomato Gray Mold by Irradiating Tomato Leaf with Near-infrared Light (2)]

A plurality of healthy tomato (variety: House Momotaro) seedlings that were grown in the small pots each having a height of 8 cm and were pinched at the fourth leaf were cut at petioles to collect the total of 54 leaves. The 54 leaves were respectively placed on the absorbed cotton wool in the Petri dishes and were divided into five test plots including "test plot 1" to "test plot 5", and "comparison plot" each including nine leaves.

Next, as for the nine cut leaves of the test plot 1, the surfaces of the leaf blades on the cut leaves were irradiated with the near-infrared light of the central wavelength of 850 nm emitted from the light source (LED) with the irradiance of 14 $W/m^2$ for 10 seconds. Then, the irradiance was measured by the irradiance meter (manufactured by Delta OHM Corporation and DO9721).

As for the nine cut leaves in test plot 2, the surfaces of the leaf blades on the cut leaves were irradiated with the same near-infrared light of the central wavelength of 850 nm as in test plot 1 with the irradiance of 14 W/m² for 300 seconds.

As for the nine cut leaves in test plot 3, the surfaces of the leaf blades on the cut leaves were irradiated with the same near-infrared light of the central wavelength of 850 nm as in test plot 1 with the irradiance of 300 W/m² for 0.1 seconds.

As for the nine cut leaves in test plot 4, the surfaces of the leaf blades on the cut leaves were irradiated with the same near-infrared light of the central wavelength of 850 nm as in test plot 1 with the irradiance of 300 W/m² for 1 second.

As for the nine cut leaves in test plot 5, the surfaces of the leaf blades on the cut leaves were irradiated with the same near-infrared light of the central wavelength of 850 nm as in test plot 1 with the irradiance of 300 W/m² for 60 seconds.

In addition, the nine cut leaves in the comparison plot were not irradiated with the near-infrared light.

Thereafter, the surfaces of the leaf blades of all the cut leaves in the test plots 1 to 5 and the comparison plot were inoculated with the brush by applying spores of gray mold fungi (Botrytis cinerea NBRC9397) proliferated in the potato dextrose agar medium. After inoculation, the Petri dishes of all the cut leaves were covered with the lids to prepare nine samples of each of the test plots 1 to 5 and nine samples of the comparison plot.

After all the prepared samples were stored in the dark place at 23°C for three days, the disease incidence state of the tomato gray mold was visually confirmed at the leaf blade on the cut leaf of each sample and classified into any one of the following "disease incidence levels" a to e. The "disease severity" was calculated by the following "disease severity calculation equation" for each sample of each test plot and each sample of the comparison plot. Then, the "control value" of each test plot was also calculated by the following "control value calculation equation". Control value calculation results are shown in Table 2.

[Disease Incidence Level]

    a. No lesion is identified on the surface of the leaf blade .. disease incidence index 0
    b. The lesion area ratio on the entire surface of the leaf blade is less than 5% .. disease incidence index 1
    c. The lesion area ratio on the entire surface of the leaf blade is 5% or more and less than 25% .. disease incidence index 2
    d. The lesion area ratio on the entire surface of the leaf blade is 25% or more and less than 50% .. disease incidence index 3
    e. The lesion area ratio on the entire surface of the leaf blade is 50% or more .. disease incidence index 4

[Disease Severity Calculation Equation]

$$\text{Disease severity} = [\textstyle\sum(\text{number of samples by disease incidence level} \times \text{disease incidence index}) \div (\text{number of samples} \times 4)] \times 100$$

[Control Value Calculation Equation]

$$\text{Control value} = 100 - (\text{disease severity in test plot/disease severity in comparison plot}) \times 100$$

[Table 2]

| Sample | Test Plot 1 | Test Plot 2 | Test Plot 3 | Test Plot 4 | Test Plot 5 | Comparison Plot |
|---|---|---|---|---|---|---|
| Irradiation Condition | $14W/m^2$ 10 Sec | $14W/m^2$ 300 Sec | $300W/m^2$ 0.1 Sec | $300W/m^2$ 1 Sec | $300W/m^2$ 60 Sec | No Irradiation |
| Disease Severity | 69 | 35 | 71 | 38 | 73 | 71 |
| Control Value | 2.8 | 50.7 | 0 | 46.5 | 0 | 0 |

From Table 2, it was found that the disease severity of the tomato gray mold was sufficiently suppressed in each sample of the test plots 2 and 4 compared to the samples of the comparison plot, and it was found that the disease severity was not suppressed in each sample of the test plots 1, 3, and 5.

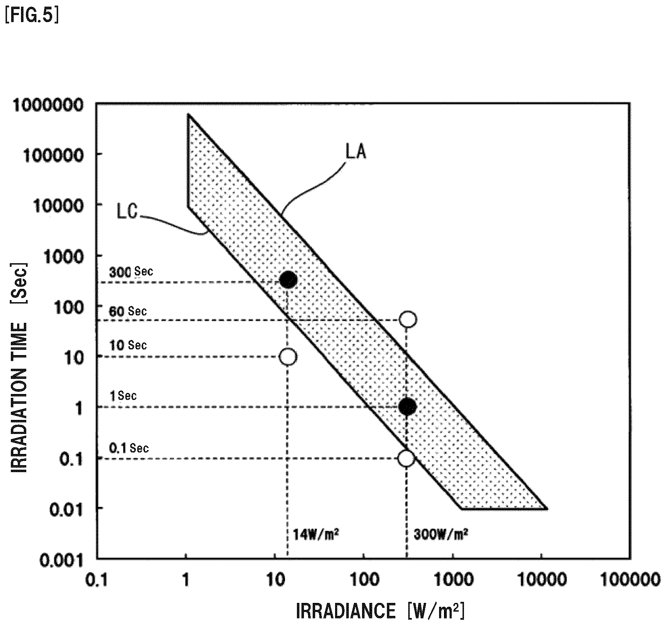

In Fig. 5, the irradiation conditions of each sample of the test plots 2 and 4 in which the disease severity was sufficiently suppressed were represented by and disposed as the coordinates "●" indicating that the effect of controlling diseases is identified, and the irradiation conditions of each sample of the test plots 1, 3, and 5 in which the disease severity was not suppressed were represented by and disposed as the coordinates "○" indicating that the effect of controlling diseases was not identified.

Incidentally, similarly to Fig. 1, Fig. 5 is the double logarithmic graph where the horizontal axis (X axis) is the irradiance ($W/m^2$) and the vertical axis (Y axis) is the irradiation time (second). Similarly to Fig. 1, the range of the "substantially trapezoidal shape" shown at the substantially central portion of the graph is surrounded by four straight lines such as the regression line LA, the regression line LC, X = 1, and Y = 0.01, and when the range is expressed by the equation, the range satisfies all following Equations 1 to 3.

$$\text{Equation 1: } 644893X^{-1.873} \geq Y \geq 5901.9X^{-1.856}$$

$$\text{Equation 2: } X \geq 1$$

$$\text{Equation 3: } Y \geq 0.01$$

As shown in Fig. 5, the coordinates "●" of all the samples in which the effect of controlling the tomato gray mold is identified are disposed inside the "substantial trapezoidal shape", and on the other hand, the coordinates "O" of all the samples in which the effect of controlling diseases is not identified are disposed outside the "substantial trapezoidal shape". Namely, if tomatoes are irradiated with the near-infrared light with the irradiance and the irradiation time set such that the coordinates exist inside the "substantially trapezoidal shape", the effect of controlling the tomato gray mold can be obtained.

Thus, it can be said that the control effect can be obtained by emitting the near-infrared light so as to satisfy all above Equations 1 to 3.

[Test Example 6: Effect of Controlling Tomato Gray Mold by Irradiating Tomato Seedling with Near-infrared Light]

Six healthy tomato (variety: House Momotaro) seedlings that were grown in the small pots each having a height of 8 cm were divided into "test plot" and "comparison plot" each including three seedlings.

Then, as for the three seedings of the test plot, substantially the center position of the entire above-ground portion of each seedling was irradiated with the near-infrared light of the central wavelength of 850 nm emitted from the light source (LED) with the irradiance of 300 $W/m^2$ for 1 second. Then, the irradiance was measured by the irradiance meter (manufactured by Delta OHM Corporation and DO9721). In addition, the three seedlings of the comparison plot were not irradiated with the near-infrared light.

Next, the entire above-ground portions of all the six seedlings of the test plot and the comparison plot were inoculated by spraying thereto a suspension of spores of tomato gray mold fungi (Botrytis cinerea NBRC9397) proliferated in the potato dextrose agar medium. After inoculation, each seedling was stored in the greenhouse at 25°C for 14 days in a state where each seeding was moisturized by covering the entire above-ground portion of each seedling with a plastic bag.

Next, one leaf was arbitrarily selected from each of the total six seedings of the test plot and the comparison plot after storage, and the leaves were cut at petioles to obtain three samples of cut leaves for the test plot and three samples of cut leaves for the comparison plot.

Then, the disease incidence state of the tomato gray mold was visually confirmed at the leaf blade of each sample and classified into any one of the following "disease incidence levels" a to e. The "disease severity" was calculated by the following "disease severity calculation equation" for each sample of the test plot and each sample of the comparison plot. In addition, the "control value" of each test plot was also calculated by the following "control value calculation equation".

[Disease Incidence Level]

a. No lesion is identified on the surface of the leaf blade .. disease incidence index 0
b. The lesion is identified in the area portion that is less than 1/3 of the entire surface of the leaf blade .. disease incidence index 1
c. The lesion is identified in the area portion that is 1/3 or more and less than 2/3 of the entire surface of the leaf blade .. disease incidence index 2
d. The lesion is identified in the area portion that is 2/3 or more of the entire surface of the leaf blade .. disease incidence index 3
e. The lesion is identified on the entire surface of the leaf blade .. disease incidence index 4

[Disease Severity Calculation Equation]

$$\text{Disease severity} = [\Sigma(\text{number of samples by disease incidence level} \times \text{disease incidence index}) \div (\text{number of samples} \times 4)] \times 100$$

[Control Value Calculation Equation]

$$\text{Control value} = 100 - (\text{disease severity in test plot/disease severity in comparison plot}) \times 100$$

As a result of the calculation, the disease severity was 42 in the samples of the test plot that were irradiated with the near-infrared light, whereas the disease severity was 67 in the samples of the comparison plot that were not irradiated with the near-infrared light. Therefore, the control value was 37.3 in the test plot, and it was found that the tomato gray mold could be effectively controlled by the irradiation treatment with the near-infrared light based on the invention.

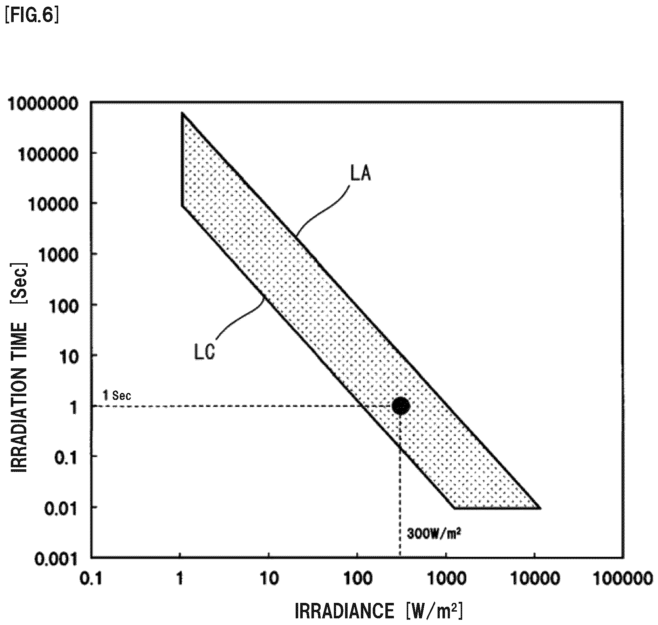

Fig. 6 is the double logarithmic graph where the horizontal axis (X axis) is the irradiance ($W/m^2$) and the vertical axis (Y axis) is the irradiation time (second) and shows the disposition of the coordinate "●" representing the irradiance (300 $W/m^2$) and the irradiation time (1 second) that are the irradiation condition of the near-infrared light of the central wavelength of 850 nm irradiated to the seedings of the test plot.

Incidentally, similarly to Fig. 1, the range of the "substantially trapezoidal shape" shown at the substantially central portion of the graph in Fig. 6 is surrounded by four straight lines such as the regression line LA, the regression line LC, X = 1, and Y = 0.01, and when the range is expressed by the equation, the range satisfies all following Equations 1 to 3.

$$\text{Equation 1: } 644893X^{-1.873} \geq Y \geq 5901.9X^{-1.856}$$

$$\text{Equation 2: } X \geq 1$$

Equation 3: $Y \geq 0.01$

As shown in Fig. 6, the coordinate "●" indicates the irradiation condition under which the tomato gray mold can be effectively controlled and is disposed inside the "substantially trapezoidal shape". Namely, if tomatoes are irradiated with the near-infrared light with the irradiance and the irradiation time set such that the coordinates exist inside the "substantially trapezoidal shape", the effect of controlling the tomato gray mold can be obtained. Thus, it can be said that the control effect can be obtained by emitting the near-infrared light so as to satisfy all above Equations 1 to 3.

[Test Example 7: Effect of Controlling Tomato Leaf Mold by Irradiating Tomato Leaf with Near-infrared Light]

A plurality of healthy tomato (variety: House Momotaro) seedlings that were grown in the small pots each having a height of 8 cm and were pinched at the fourth leaf were cut at petioles to collect a total of 24 leaves. The 24 leaves were respectively placed on the absorbed cotton wool in the Petri dishes and were divided into "test plot" and "comparison plot" each including 12 leaves.

Next, as for the 12 cut leaves in the test plot, the surfaces of the leaf blades on the cut leaves were irradiated with the near-infrared light of the central wavelength of 850 nm emitted from the light source (LED) with the irradiance of 300 W/m$^2$ for 1 second. Then, the irradiance was measured by the irradiance meter (manufactured by Delta OHM Corporation and DO9721). In addition, the 12 cut leaves in the comparison plot were not irradiated with the near-infrared light.

Thereafter, the surfaces of the leaf blades on all the cut leaves in the test plot and the comparison plot were inoculated with the brush by applying spores of tomato leaf mold fungi (Fulvia fulva NBRC31254) proliferated in the potato dextrose agar medium. After inoculation, the Petri dishes of all the cut leaves were covered with the lids to prepare 12 samples of the test plot and 12 samples of the comparison plot.

After all the prepared samples were stored in the dark place at 25°C for three days, the disease incidence state of the tomato leaf mold was visually confirmed at the leaf blade on the cut leaf of each sample and classified into any one of the following "disease incidence levels" a to e. The "disease severity" was calculated by the following "disease severity calculation equation" for each sample of the test plot and each sample of the comparison plot. Then, the "control value" of each test plot was also calculated by the following "control value calculation equation".

[Disease Incidence Level]

    a. No lesion is identified on the surface of the leaf blade .. disease incidence index 0
    b. The lesion area ratio on the entire surface of the leaf blade is less than 5% .. disease incidence index 1
    c. The lesion area ratio on the entire surface of the leaf blade is 5% or more and less than 25% .. disease incidence index 2
    d. The lesion area ratio on the entire surface of the leaf blade is 25% or more and less than 50% .. disease incidence index 3
    e. The lesion area ratio on the entire surface of the leaf blade is 50% or more .. disease incidence index 4

[Disease Severity Calculation Equation]

Disease severity = [∑(number of samples by disease incidence level × disease incidence index) ÷ (number of samples × 4)] × 100

[Control Value Calculation Equation]

Control value = 100 - (disease severity in test plot/disease severity in comparison plot) × 100

As a result of the calculation, the disease severity was 42 in the samples of the test plot that were irradiated with the near-infrared light, whereas the disease severity was 77 in the samples of the comparison plot that were not irradiated with the near-infrared light. Therefore, the control value was 45.5 in the test plot, and it was found that the tomato leaf mold could be effectively controlled by the irradiation treatment with the near-infrared light based on the invention.

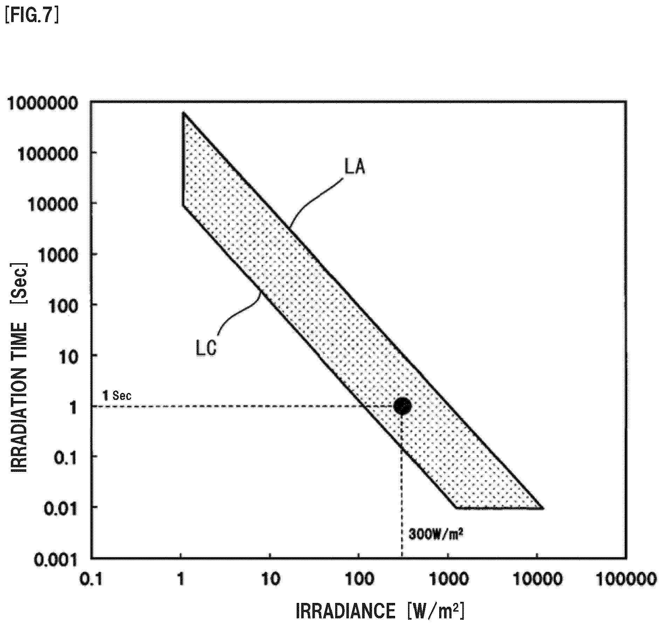

Fig. 7 is the double logarithmic graph where the horizontal axis (X axis) is the irradiance (W/m$^2$) and the vertical axis (Y axis) is the irradiation time (second) and shows the disposition of the coordinate "●" representing the irradiance (300 W/m$^2$) and the irradiation time (1 second) that are the irradiation condition of the near-infrared light of the central wavelength of 850 nm irradiated to the cut leaves in the test plot.

Incidentally, similarly to Fig. 1, the range of the "substantially trapezoidal shape" shown at the substantially central portion of the graph in Fig. 7 is surrounded by four straight lines such as the regression line LA, the regression line LC, X = 1, and Y = 0.01, and when the range is expressed by the equation, the range satisfies all following Equations 1 to 3.

$$\text{Equation 1: } 644893X^{-1.873} \geq Y \geq 5901.9X^{-1.856}$$

$$\text{Equation 2: } X \geq 1$$

$$\text{Equation 3: } Y \geq 0.01$$

As shown in Fig. 7, the coordinate "●" indicates the irradiation condition under which the tomato leaf mold can be effectively controlled and is disposed inside the "substantially trapezoidal shape". Namely, if tomatoes are irradiated with the near-infrared light with the irradiance and the irradiation time set such that the coordinates exist inside the "substantially trapezoidal shape", the effect of controlling the tomato leaf mold can be obtained. Thus, it can be said that the control effect can be obtained by emitting the near-infrared light so as to satisfy all above Equations 1 to 3.

[Test Example 8: Effect of Controlling Cucumber Downy Mildew by Irradiating Cucumber Seedling with Near-infrared Light]

20 healthy cucumber (white wart cucumber) seedlings grown in the small pots each having a height of 8 cm were divided into "test plot 1", "test plot 2", "test plot 3", and "comparison plot" each including five seedlings.

Next, as for the five seedings of the test plot 1, substantially the center position of the entire above-ground portion of each seedling was irradiated with the near-infrared light of the central wavelength of 850 nm emitted from the light source (LED) with the irradiance of 14 W/m$^2$ for 300 seconds. Then, the irradiance was measured by the irradiance meter (manufactured by Delta OHM Corporation and DO9721).

As for the five seedlings of the test plot 2, substantially the center position of each entire seedling was irradiated with the near-infrared light of the central wavelength of 850 nm with the irradiance of 100 W/m$^2$ for 10 seconds.

As for the five seedlings of the test plot 3, substantially the center position of each entire seedling was irradiated with the near-infrared light of the central wavelength of 850 nm with the irradiance of 300 W/m$^2$ for 1 second.

In addition, the five seedlings of the comparison plot were not irradiated with near-infrared light.

Next, the surfaces of the leaf blades of all 20 seedlings in the test plots 1 to 3 and the comparison plot were inoculated with the brush by applying cucumber downy mildew fungi (Pseudoperonospora cubensis) collected from cucumber leaves infected with the cucumber downy mildew. Thereafter, the 20 seedlings were stored in the greenhouse at 25°C for 10 days.

Next, a third leaf from the bottom in each of the total 20 seedlings in the test plots 1 to 3 and the comparison plot after storage was cut at the petiole to obtain five samples of cut leaves for each of the test plots 1 to 3 and the comparison plot.

Then, the disease incidence state of the cucumber downy mildew was visually confirmed at the leaf blade of each sample and classified into any one of the following "disease incidence levels" a to e. The "disease severity" was calculated by the following "disease severity calculation equation" for each sample of the test plots 1 to 3 and each sample of the comparison plot. Then, the "control value" of each of the test plots 1 to 3 was also calculated by the following "control value calculation equation".

[Disease Incidence Level]

    a. No lesion is identified on the surface of the leaf blade .. disease incidence index 0
    b. The lesion area ratio on the entire surface of the leaf blade is less than 5% .. disease incidence index 1
    c. The lesion area ratio on the entire surface of the leaf blade is 5% or more and less than 25% .. disease incidence index 2
    d. The lesion area ratio on the entire surface of the leaf blade is 25% or more and less than 50% .. disease incidence index 3
    e. The lesion area ratio on the entire surface of the leaf blade is 50% or more .. disease incidence index 4

[Disease Severity Calculation Equation]

$$\text{Disease severity} = [\Sigma(\text{number of samples by disease incidence level} \times \text{disease incidence index}) \div (\text{number of samples} \times 4)] \times 100$$

[Control Value Calculation Equation]

$$\text{Control value} = 100 - (\text{disease severity in test plot}/\text{disease severity in comparison plot}) \times 100$$

As a result of the calculation, the disease severity was 45 in the samples (an irradiance of 14 W/m$^2$ and an irradiation time of 300 seconds) of test plot 1, the disease severity was 40 in the samples (an irradiance of 100 W/m$^2$ and an irradiation time of 10 seconds) of test plot 2, and the disease severity was 40 in the samples (an irradiance of 300 W/m$^2$ and an irradiation time of 1 second) of test plot 3. On the other hand, the disease severity was 85 in the samples of the comparison plot (not irradiated) of the comparison plot.

Therefore, the control values were 45, 40, and 40 in the test plots 1 to 3 respectively, and it was found that the cucumber downy mildew could be effectively controlled by the irradiation treatment with the near-infrared light based on the invention.

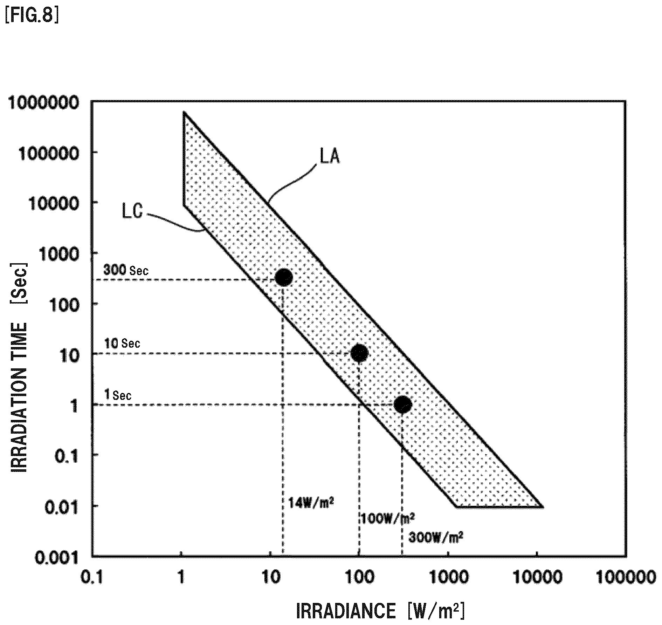

Fig. 8 is the double logarithmic graph where the horizontal axis (X axis) is the irradiance (W/m$^2$) and the vertical axis (Y axis) is the irradiation time (second) and shows the disposition of the coordinates "●" representing each irradiation condition (irradiance and irradiation time) of the near-infrared light of the central wavelength of 850 nm irradiated to the seedings of the test plots 1 to 3.

Incidentally, similarly to Fig. 1, the range of the "substantially trapezoidal shape" shown at the substantially central portion of the graph in Fig. 8 is surrounded by four straight lines such as the regression line LA, the regression line LC, X = 1, and Y = 0.01, and when the range is expressed by the equation, the range satisfies all following Equations 1 to 3.

$$\text{Equation 1: } 644893X^{-1.873} \geq Y \geq 5901.9X^{-1.856}$$

$$\text{Equation 2: } X \geq 1$$

$$\text{Equation 3: } Y \geq 0.01$$

As shown in Fig. 8, three coordinates "●" indicate the irradiation conditions under which the cucumber downy mildew can be effectively controlled and are disposed inside the "substantially trapezoidal shape". Namely, if cucumbers are irradiated with the near-infrared light with the irradiance and the irradiation time set such that the coordinates exist inside the "substantially trapezoidal shape", the effect of controlling the cucumber downy mildew can be obtained. Thus, it can be said that the control effect can be obtained by emitting the near-infrared light so as to satisfy all above Equations 1 to 3.

[Industrial Applicability]

According to the plant disease control method and the plant disease control apparatus of the invention, since plant diseases can be controlled without using the pesticide, the plant disease control method and the plant disease control apparatus can be widely used in the agricultural field.

[Reference Signs List]

| LA, LB, LC | Regression line |
| 1 | Handcart-type device |
| 11 | Irradiation portion |
| 12 | Support board |
| 13 | Base |
| 14 | Control unit |
| 15 | Power supply unit |
| 16 | Handle |
| 17 | Wheel |
| 18 | Speed sensor |
| 19 | Axle |
| 2 | Hand-held device |
| 21 | Irradiation portion |
| 22 | Support bar |
| 23 | Grip portion |
| 24 | Housing |
| 25 | Cord |
| 26 | Control unit |
| 27 | Power supply unit |
| 28 | Acceleration sensor |
| 29 | Handgrip |
| U | Irradiation unit |
| T1, T2 | Plant body (tomato) |

**Claims**

1.   A plant disease control method for irradiating a plant under cultivation with a near-infrared light including a wavelength set within a wavelength range of 800 to 1000 nm so as to satisfy all following Equations 1 to 3 where X is an irradiance ($W/m^2$) and Y is an irradiation time (second).

$$\text{Equation 1: } 644893X^{-1.873} \geq Y \geq 5901.9X^{-1.856}$$

$$\text{Equation 2: } X \geq 1$$

$$\text{Equation 3: } Y \geq 0.01$$

2.   The plant disease control method according to claim 1, wherein the irradiance is automatically adjusted in response to a fluctuation in the irradiation time of the near-infrared light.

3.   The plant disease control method according to claim 1 or 2, wherein the plant disease control method is performed once every 1 to 14 days.

4. The plant disease control method according to claim 1, 2 or 3, wherein a disease of the plant is a disease caused by a fungus.

5. The plant disease control method according to claim 4, wherein the fungus is any one of an ascomycete, a basidiomycete, a mastigomycotina, an oomycete, and a deuteromycete.

6. The plant disease control method according to claim 1, 2 or 3, wherein a disease of the plant is any one of strawberry powdery mildew, tomato powdery mildew, tomato gray mold, tomato leaf mold, and cucumber downy mildew.

7. A plant disease control apparatus comprising:

a light source configured to irradiate a plant under cultivation with a near-infrared light including a wavelength set within a wavelength range of 800 to 1000 nm; and
adjustment means configured to adjust at least one of an irradiance and an irradiation time of the near-infrared light emitted from the light source so as to satisfy all following Equations 1 to 3 where X is the irradiance ($W/m^2$) and Y is the irradiation time (second).

$$\text{Equation 1: } 644893X^{-1.873} \geq Y \geq 5901.9X^{-1.856}$$

$$\text{Equation 2: } X \geq 1$$

$$\text{Equation 3: } Y \geq 0.01$$

8. The plant disease control apparatus according to claim 7, wherein the adjustment means is configured to adjust the irradiance through automatic control in response to a fluctuation in the irradiation time of the near-infrared light emitted from the light source.

[FIG.1]

[FIG.2]

[FIG.3]

[FIG.4]

[FIG.5]

[FIG.6]

[FIG.7]

[FIG.8]

[FIG.9]

[FIG.10]

[FIG.11]

# EP 4 029 373 A1

<table>
<tr><td colspan="2" style="text-align:center"><b>INTERNATIONAL SEARCH REPORT</b></td><td>International application No.<br><br>PCT/JP2020/034567</td></tr>
</table>

**A. CLASSIFICATION OF SUBJECT MATTER**
A01N 3/00(2006.01)i; A01G 7/00(2006.01)i; A01G 13/00(2006.01)i
FI: A01G7/00 601C; A01G7/00 604Z; A01G13/00 Z; A01N3/00
According to International Patent Classification (IPC) or to both national classification and IPC

**B. FIELDS SEARCHED**

Minimum documentation searched (classification system followed by classification symbols)
A01N1/00-3/04; A01G7/00-7/02; A01G11/00-15/00

Documentation searched other than minimum documentation to the extent that such documents are included in the fields searched
Published examined utility model applications of Japan        1922-1996
Published unexamined utility model applications of Japan      1971-2020
Registered utility model specifications of Japan              1996-2020
Published registered utility model applications of Japan      1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2013-230122 A (SHIMANE UNIVERSITY) 14 November 2013 (2013-11-14) paragraphs [0019]-[0021], [0028], fig. 5 | 1, 3-7 |
| A | JP 2006-271374 A (SANKO SEIKI KK) 12 October 2006 (2006-10-12) entire text, all drawings | 1-8 |
| A | JP 2006-244910 A (SANKO SEIKI KK) 14 September 2006 (2006-09-14) entire text, all drawings | 1-8 |

☐ Further documents are listed in the continuation of Box C.        ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>16 November 2020 (16.11.2020) | Date of mailing of the international search report<br>24 November 2020 (24.11.2020) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

38

Form PCT/ISA/210 (patent family annex) (January 2015)

| Patent Documents referred in the Report | Publication Date | Patent Family | Publication Date |
|---|---|---|---|
| JP 2013-230122 A | 14 Nov. 2013 | (Family: none) | |
| JP 2006-271374 A | 12 Oct. 2006 | (Family: none) | |
| JP 2006-244910 A | 14 Sep. 2006 | (Family: none) | |

**INTERNATIONAL SEARCH REPORT**
Information on patent family members

International application no.

PCT/JP2020/034567

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6061124 B

- JP 5927015 B